# EUROPEAN PATENT APPLICATION

(11) **EP 3 517 739 A1**
(43) Date of publication of application: **31.07.2019**
(21) Application number: 18214356.0
(22) Date of filing: 20.12.2018
(51) Int. Cl.: F01D 11/12, F01D 5/20, F01D 5/22, F16J 15/447

(54) **CIRCUMFERENTIAL SEAL**

(30) Priority: 26.01.2018 GB 201801296
(71) Applicant: Rolls-Royce plc, London SW1E 6AT (GB)
(72) Inventor: Keenan, Michael, Derby, DE24 8BJ (GB)
(74) Representative: Rolls-Royce plc

(57) **Abstract**

A circumferential seal for a rotating component comprising a static seal part (69, 96) and a rotating seal part (90) having a common rotational axis. The rotating seal part (90) comprises a fin seal (92), wherein the fin seal (92) comprises a protective coating (63, 68, 94). A first portion (65) of the fin seal (92) has a first sealing gap (70) to the static seal part (69, 96) and a second portion (60) of the fin seal (92) has a second sealing gap (64) to the static seal part (69, 96). The first sealing gap (70) has a greater radial dimension than the second sealing gap (64).

## Description

The present disclosure concerns a circumferential seal, a stage of a gas turbine, a gas turbine engine, and a method of sealing a circumferential seal, a method of sealing a stage of a gas turbine engine, and a method of sealing a gas turbine engine.

Seals are used on a gas turbine engine for controlling airflow through the gaps between rotors and stators, or for example between two rotors rotating at different angular velocities.

Typically such seals comprise a tortuous path for airflow passing through the seal, such that pressure losses across the seal is as large as possible in order to minimise flow through it. Any flow through the seal can represent performance losses. For example there may be a performance loss if any working fluid escapes through the seal.

Typically such seals may be labyrinth seals. A labyrinth seal may create a tortuous path through the seal by, for example, the use of fins from either the rotor or the stator. In addition to the tortuous path, the labyrinth seal, for example the fins of the labyrinth seal, may be designed to minimise the gap between any part of the rotor and stator, in order to further minimise the airflow through the seal.

During operation of a gas turbine engine a rotor may experience deformation. This deformation may be caused by, for example, circumferential forces from rotation of the rotor, thermal expansion of the rotor, and/or vibration. As the rotor experiences deformation the gap can vary between the rotor and the stator. This can be detrimental to performance whereby in certain operational conditions a greater gap is formed between the rotor and the stator, compared to other operational conditions, such that a greater airflow can pass through the seal.

In order to minimise the airflow through a seal in a gas turbine across a range of operation conditions typically a liner material may be incorporated into the stator. During engine pass off and/or run-in, the rotor may cut into the stator liner material such that a tighter gap can be maintained during operation. However during the cutting of the liner material the rotor is worn. If the rotor wears too much then this may increase the gap between the rotor and stator as rotor material is worn away. Any wear to the rotor and/or stator may require maintenance.

It is therefore desirable to provide a seal for a rotating component, for example a gas turbine engine, that minimises the airflow through the seal in order to increase component performance. It is desirable to provide a seal for a rotating component, for example a gas turbine engine, that minimise wear of the rotor and/or stator in order to prevent loss of performance and minimise maintenance costs.

According to an aspect there is provided a circumferential seal for a rotating component comprising a static seal part and a rotating seal part having a common central axis. The rotating seal part comprises a fin seal, wherein the fin seal comprises a protective coating. A first portion of the fin seal has a first sealing gap to the static seal part and a second portion of the fin seal has a second sealing gap to the static seal part. The first sealing gap has a greater radial dimension than the second sealing gap.

The fin seal may comprise a fin. The fin seal may comprise a plurality of fins. The protective coating may be for protecting the fin seal from wear. The protective coating may be for protecting the fin seal from wear due to rubbing against the static seal part.

The rotating component may impart energy onto a working fluid of the component. The circumferential seal may be for preventing working fluid escaping from a part of the rotating component.

The protective coating may be more wear resistant than the fin seal. The protective coating may be for resisting friction between the fin seal and the static seal part (for example during rub-in). The protective coating may be 10% or less, 20% or less, 30% or less, 40% or less, 50% or less, 60% or less, 70% or less, or more than 70% of the depth of the fin seal. The protective coating on the second portion may be a sacrificial coating.

The first portion may extend over a portion of the circumference. The first sealing gap and the second sealing gap may be average radial gaps, for example an average of the radial gaps across the first or second portion.

The first sealing gap and the second sealing gap may be both positive (e.g. to define a gap) and/or negative (e.g. during rubbing and/or cutting).

A fin of a fin seal may extend from the rotating seal part to a distal edge. A sealing gap (for example the first sealing gap or the second sealing gap) may be defined by the distance between the distal edge and the static seal part.

The protective coating may have a thickness greater than or equal to the difference in radial dimension between the first sealing gap and the second sealing gap.
The thickness may be 1.1, 1.2, 1.3, 1.4, 1.5, 1.75, 2 or more than 2 times the difference in radial dimension between the first sealing gap and the second sealing gap. The thickness may be less than the radial dimension between the first sealing gap and the second sealing gap. The thickness may be 0.9, 0.9, 0.7, 0.6, 0.5, 0.25 or less than 0.25 times the difference in radial dimension between the first sealing gap and the second sealing gap.

The static seal part may comprise an abradable liner.

The static seal part may be static in relation to the rotating component. The static seal (e.g. slow seal) part may rotate at a slower rotational speed than the rotating seal part. The static seal part may be fixed in position. The static seal part may not rotate.

The rotating seal part may be arrangeable such that second portion of the fin seal contacts the static seal part.

The rotating seal part may be arrangeable such that the second sealing gap has a negative radial dimension.

The second portion may extend beyond the radially inner surface of the static seal part. The second sealing gap may be negative such that the second sealing gap defines an overlap between the second portion and the static seal part. In use the overlap will cause wearing of the second portion and the static seal part. An overlap may be when the fin seal cuts into the static seal part. The rotating seal part may be arrangeable due to deformation. Deformation may be caused by operation. Deformation may be caused by thermal and/or centrifugal effects during normal operation.

The first portion may have a first circumferential position and the second portion has a second circumferential position, and whereby the first circumferential position is different to the second circumferential position.

The circumferential seal may comprise a plurality of first portions and a plurality of second portions, wherein each first portion and each second portion are interspersed around the circumference of the circumferential seal.

Each first portion may be adjacent two second portions. Each second portion may be adjacent two first portions. The may be an equal number of first portions and an equal number of second portions. There may be one, two, three, four or more than four first portions. The circumferential seal may have an aspect of rotational symmetry.

The radial dimension of the first sealing gap may vary sinusoidally in the circumferential direction and the radial dimension of the second sealing gap may vary sinusoidally in the circumferential direction.

The first sealing gap, when adjacent the second sealing gap, may form a continuous profile. A sealing gap comprising a first sealing gap adjacent a second sealing gap may have a radial dimension that varies sinusoidally in the circumferential direction.

The fin seal may comprise a first fin and a second fin, wherein the first fin is axially offset from the second fin with respect to the common rotational axis, and wherein the first fin comprises the first portion and the second fin comprises the second portion.

The first portion may extend around the entire circumference of the circumferential seal and the second portion may extend around the entire circumference of the circumferential seal.

The fin seal may further comprises a third portion with a third sealing gap. The third sealing gap may be of different radial dimension to the first and/or second sealing gaps.

The fin seal may further comprises a fourth portion with a fourth sealing gap. The fourth sealing gap may be of different radial dimension to the first and/or second and/or third sealing gaps.

According to an aspect a stage of a gas turbine engine may comprise the circumferential seal as claimed herein.

According to an aspect a stage of a gas turbine engine may comprise the circumferential seal as claimed herein, the stage further comprising a set of blades, wherein the rotating seal part comprises a plurality of blade sealing parts, wherein each blade sealing part corresponds to, and is attached to, a blade of the set of blades, and wherein each blade sealing part comprises a first portion or a second portion.

The fin seal may comprise a plurality of blade fin seals, each blade fin seal corresponding to a blade of the set of blades. The first portion of the fin seal may correspond to a first blade fin seal and the second portion of the fin seal may correspond to a second blade fin seal. The blade fin seals may comprise a first blade fin seal and/or a second blade fin seal. The first blade fin seal may correspond to a first blade and/or a second blade fin seal may correspond to a second blade. A plurality of first blades and second blades may be interspersed.

The blades that comprise a first portion and blades that comprise a second portion may be interspersed.

According to an aspect a gas turbine engine may comprise the circumferential seal as claimed herein.

According to an aspect there is provided a method of sealing a circumferential seal (for example as claimed herein), the method comprising the step of rotating the rotating seal part such that second portion wears against the abradable liner for providing a tight seal, whilst the rotating seal part is arranged such that a positive first sealing gap is maintained.
According to an aspect there is provided a method of sealing a stage of a gas turbine engine comprises the method of sealing a circumferential seal as claimed herein.

The circumferential seal as described and/or claimed herein may improve performance of a rotating component. For example performance may be improved by providing a seal that minimises airflow through the seal across a range of operational conditions and/or across the life of a gas turbine engine.

The circumferential seal as described and/or claimed herein (for example comprising a rotating seal part and a static seal part) may minimise the gap between the rotor and the stator across a range of operational conditions. For example the operational conditions may include take-off, climb and/or cruise. The circumferential seal as described and/or claimed herein may minimise the gap between the rotor and the liner of the stator whilst minimising wear on the rotor. The circumferential seal as described and/or claimed herein may minimise the sealing gap between the rotor and the stator across the operational life of the gas turbine engine.

The circumferential seal as described and/or claimed herein may minimise wear to the rotor whilst minimising the thickness of protective coating on the rotor. The circumferential seal as described and/or claimed herein may minimise wear to the rotor when the maximum thickness of protective coating is limited by manufacturing techniques. The circumferential seal as described and/or claimed herein may minimise wear of the rotor when an unprotected portion of the rotor may wear faster than the protective coating.

The circumferential seal as described and/or claimed herein may minimise wear of the rotor when the rotor rubs against a different portion of the stator liner at different operational states, for example rub-in, idling, climb and/or cruise.

The circumferential seal as described and/or claimed herein may minimise heat generation in the seal. For example heat generation may be minimised by minimising the contact area between the rotor and stator. For example heat generation may be minimised by intermittent cutting. Heat generation may occur when a portion of the stator liner experiences cutting as the rotor rotates. For example heat generation may be minimised whereby when the rotor is in a first position a portion of the rotor is rubbing against a portion of the stator, whereas in a second position no part of the rotor is rubbing against the same portion of the stator.

The circumferential seal as described and/or claimed herein may minimise wear on the rotor when the seal is exposed to high temperatures during operation. For example high temperature operation the seal may require a liner material that is more robust and/or harder to cut.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** shows a sectional side view of a gas turbine engine comprising a circumferential seal as described and/or claimed herein;
**Figure 2** shows a sectional side view of a fin seal. Figure 2a shows an unworn fin seal with two fins. Figure 2b shows the fin seal after a period of wear. Figure 2c shows the fin seal after a further period of wear;
**Figure 3** shows a sectional side view of an embodiment of the fin seal according to the invention. Figure 3a shows an unworn fin seal with two fins. Figure 3b shows the fin seal after a period of wear. Figure 3c shows the fin seal after a further period of wear;
**Figure 4** shows a sectional side view of a fin seal comprising a single fin.
Figure 4a shows the unworn fin seal. Figure 4b shows the fin seal during a period of wear. Figure 4c shows the fin seal after the period of wear. Figure 4d shows the fin seal after a further period of wear;
**Figure 5** shows a sectional side view of a rotor comprising an embodiment of the fin seal according to the invention. In the Figure 5a example, the fin seal is located on a radially outer portion of the rotor. In the Figure 5b example the fin seal is located on a radially inner portion of the rotor;
**Figure 6** shows an axial view of a rotor comprising an embodiment of the fin seal according to the invention;
**Figure 7** shows an axial view of the rotor of the Figure 6 example after a period of wear on the fin seal;
**Figure 8** shows an axial view of a rotor comprising an embodiment of the fin seal according to the invention.

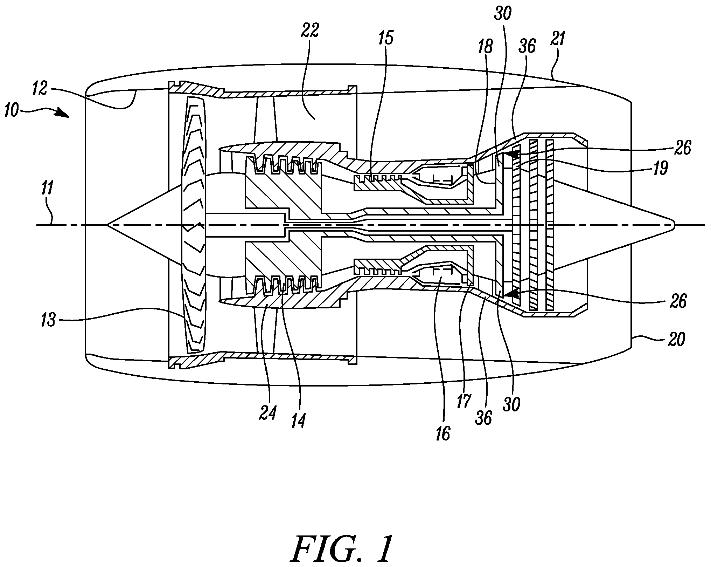

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A core structure 24 generally surrounds the core e.g. the compressor stages, combustion equipment and turbine stages. A nacelle 21 generally surrounds the engine 10 and defines both the intake 12 and the exhaust nozzle 20.

The principal rotational axis 11 defines axial, radial and circumferential directions of the gas turbine engine 10. The principal rotational axis 11 may be a common central axis for the components of the gas turbine engine 10. For example rotating components such as the rotating seal part 30 may rotate about the common central axis. Static components, such as the static seal part 36 may circumferentially surround the common central axis, for example the common central axis may be in the centre of the static seal part 36 (accounting for manufacturing tolerances and operational distortion).

Figure 1 shows a circumferential seal 26 on the intermediate pressure turbine 18. The circumferential seal 26 comprises a rotating seal part 30 and a static seal part 36. The intermediate pressure turbine 18 comprises the rotating seal part 30. The rotating seal part 30 surrounds the intermediate pressure turbine 18. The core structure 24 comprises the static seal part 36. The static seal part 36 is positioned radially outwardly of the rotating seal part 30. The static seal part 36 surrounds the rotor and defines a circumferential gap between the rotating seal part 30 and the static seal part 36.

Whilst the circumferential seal 26 is shown on a single stage of the intermediate pressure turbine 18, the circumferential seal 26 is not limited in its position on the gas turbine engine 10. For example the circumferential seal 26 can be positioned between any rotor and stator of the gas turbine engine 10. For example the circumferential seal 26 can be positioned on other turbine stages, for example the high-pressure turbine 17 or the low-pressure turbine 19. The circumferential seal 26 can be positioned on any rotor of the gas turbine engine, for example compressor stages or fan stages.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the airflow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

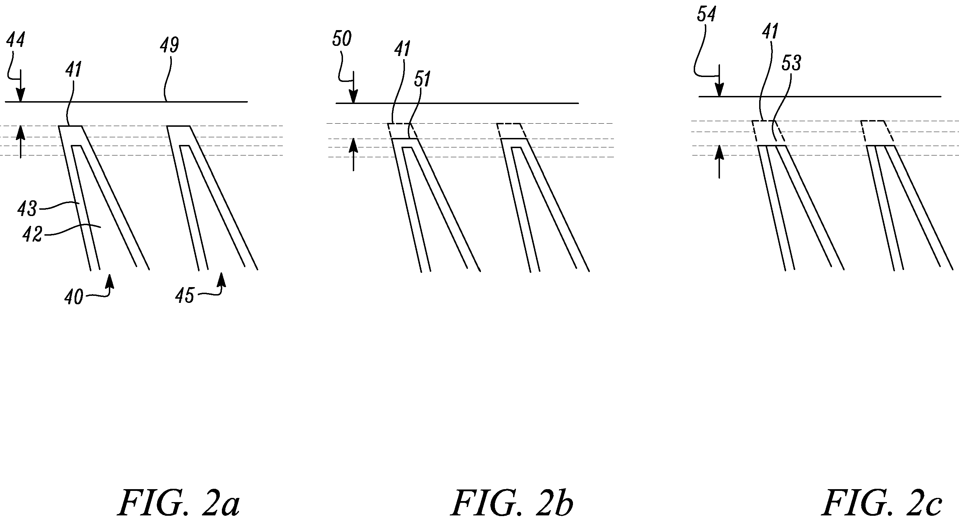

Figure 2a shows an embodiment of a fin seal comprising two fins, fin 40 and fin 45. Fin 40 and fin 45 may be identical and will now be described in relation to fin 40. Fin 40 comprises a fin body 42, a first protective coating 43 and a fin tip 41. A first fin sealing gap 44 is defined between the fin tip 41 and a static seal part 49. In the Figure 2a example both fins 40 and 45 have the same sealing gap. During operation, due to mechanical and thermal effects the fins may move and/or extend towards the static seal part and wear against the static seal part and/or cut into the static seal part.

Figure 2b shows the Figure 2a example after a period of wear. For example Figure 2b may be after a period of operation of a gas turbine, that comprises the seal, such that the gas turbine has cooled and the fin seal has returned to its initial position. Both fin 40 and fin 45 have worn such that their tip is defined by worn fin tip 51, with regard to fin 40. Worn fin tip 51 is shown in comparison to fin tip 41 (shown in dotted lines). Due to the wear, the sealing gap has increased from the first sealing gap 44 to the second sealing gap 50. The first sealing gap 44 and the second sealing gap 50 are non-operational sealing gaps. The first sealing gap 44 and the second sealing gap 50 when the seal is not in a period of operation. The second sealing gap 50 is of greater dimension than the first sealing gap 44.

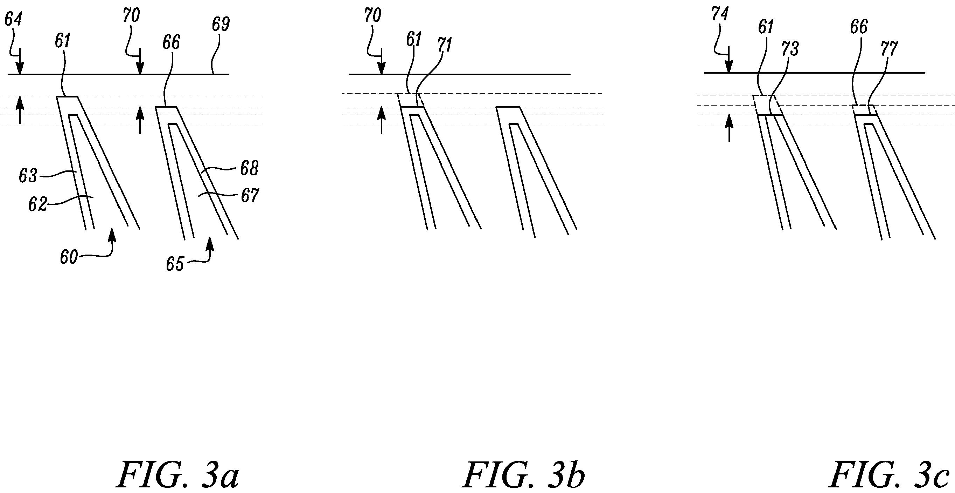

Figure 2c shows the arrangement of Figure 2b after a further period of operation and/or wear. The tip of fin 40 has been worn such that it is defined by the further worn fin tip 53. The further worn fin tip 53 has exposed fin body 42. The fin seal gap is increased to the third sealing gap 54. Disadvantageously the protective coating on both fins shown in Figure 3c is worn away to the extent that the fin body 42 is exposed at the same time. Once the protective coating is worn away, exposing the fin body 42, the fin will experience increased rates of wear during further operation.

The cutting and/or wearing force that wears the fin tips is predominantly defined by the mechanical and/or thermal effects on the rotor, which defines the extent of which the rotor sealing portion moves and/or extends towards the stator sealing portion. Therefore the force that causes the wear is only partially influenced by the number of fins. For example having two fins does not half the force that is wearing the fins.

Figures 3a, 3b and 3c show how an alternative embodiment of a fin seal may be worn after periods of wear.

Figure 3a shows a fin seal comprising a first fin 65 and a second fin 60 and a static seal part 69.

The first fin 65 has a first fin body 67 and a first fin protective coating 68. The first fin 65 has a first fin tip 66. The first fin tip 66 has a first sealing gap 70 between the first fin tip 66 and the static seal part 69.

In other embodiments there may be further fins/portions, each with their own sealing gaps. For example there may be a third fin/portion with a third sealing gap. There may be a fourth fin/portion with a fourth sealing gap. There may be more than four sealing fins each with their own sealing gap dimensions. Where more than two portions, the wear may occur progressively along the portions, for example wearing the first portion first, then the second portion, then the third portion, then the fourth portion, in the method described herein.

In Figure 3a, the second fin 60 has a second fin body 62 and a second fin protective coating 63. The second fin 60 has a second fin tip 61. The second fin tip 61 has a second sealing gap 64 between the second fin tip 61 and the static seal part 69. The second sealing gap 64 is defined in the non-operational situation, for example where the seal is not rotating and at non-operation temperatures (for example room temperature).

In figure 3a the second fin 60 and the first fin 65 are elongate fins extending towards the static seal part 69. Whilst not shown in Figure 3a, the second fin and the first fin 65 extend from a rotating seal part. In the figure 3a example, the fins are angled such that their surfaces are at an oblique angle to the static seal part 69. The second fin 60 and first fin 65 may be referred to as knife edge seals, for example a labyrinth knife edge seal.

The first fin 65 may be considered a first portion of the fin seal. The second fin 60 may be considered a second portion of the fin seal.

The second fin body 62, in the Figure 3a example, has two sides leading to a flat portion at its peak. The part of the second body 62 shown in figure 3a is coated with a second fin protective coating 63. The second fin protective coating 63 forms an even layer of protective coating across the portion of the second fin body 62 shown in Figure 3a. The depth of the second fin protective coating 63 is deeper at the tip. In the Figure 3a example, the tip of the second fin protective coating mirrors the tip of the underlying second fin body 62. The tip of the second fin protective coating 63 is parallel to the static seal part 69 in the Figure 3a example. The tip of the second fin protective coating 63 forms the second fin unworn tip 61. In other embodiments the tip may be a point or a rounded end. In other embodiments the tip may be flat but not parallel to the static seal part 69. The second fin 60 may be representative of any fin described in this application, for example fins described in relation to other embodiments. The construction of the second fin 60 may be applied to the first fin 65.

Figure 3a shows how the second sealing gap 64 is of smaller dimension than the first sealing gap 70. In the figure 3a example the second fin 60 is set higher than the first fin 65. However in other embodiments a second sealing gap 64 smaller than a first sealing gap 70 may be achieved by a first sealing fin that is shorter than a second sealing fin, or for example a change in shape of the static seal part.

Figure 3b shows how after a period of wear the tip of the second sealing fin is defined by a second fin worn tip 71. Figure 3b shows a comparison of the second fin worn tip 71 with the second fin unworn tip 61 (shown in Figure 3b as a dotted line). The height of the second fin 60 has been decreased by the difference between the second fin unworn tip 61 and the second fin worn tip 71. The gap between the second fin 60 and the static seal part 69 has increased. For example in the Figure 3b example the gap has increased to the dimension of the first sealing gap 70. In the Figure 3b example the gap between the second fin 60 and the static seal part 69 and the first fin 65 and the static seal part 69 is the same.

Figure 3c shows the second fin 60 and the first fin 65 after a further period of wear. The second fin 60 has a tip that is now defined by the second fin further worn tip 73. The second fin further worn tip 73 has exposed second fin body 62 due to wearing through the protective coating 63. A comparison of the second fin further worn tip 73 and the second fin unworn tip 61 (shown as a dotted line) is shown in Figure 3c. The first fin 65 has a tip now defined by a first fin worn tip 77. A comparison of the first fin worn tip 77 and the first fin unworn tip 66 is shown in Figure 3c. The sealing gap for the second fin 60 has increased in dimension in Figure 3c compared to Figure 3b. The sealing gap (in the non-operational situation e.g. no rotation or thermal effects) for the first fin 65 has increased in dimension in Figure 3c compared to Figure 3b. Both the sealing gap for the second fin 60 and the first fin 65 is defined by the third sealing gap 74 shown in Figure 3c.

Figures 3a, 3b and 3c show how with the arrangement of the second fin 60 and first fin 65, such that the second sealing gap 64 is greater than the first sealing gap 70, initially it is only the second fin 60 that wears. The first fin 65 only wears when the second fin 60 tip has been worn down. Figure 3c shows that when the second fin 60 is worn such that no protective coating 63 is left to protect the tip, there is still protective coating on the first fin 65 to protect the fin seal.

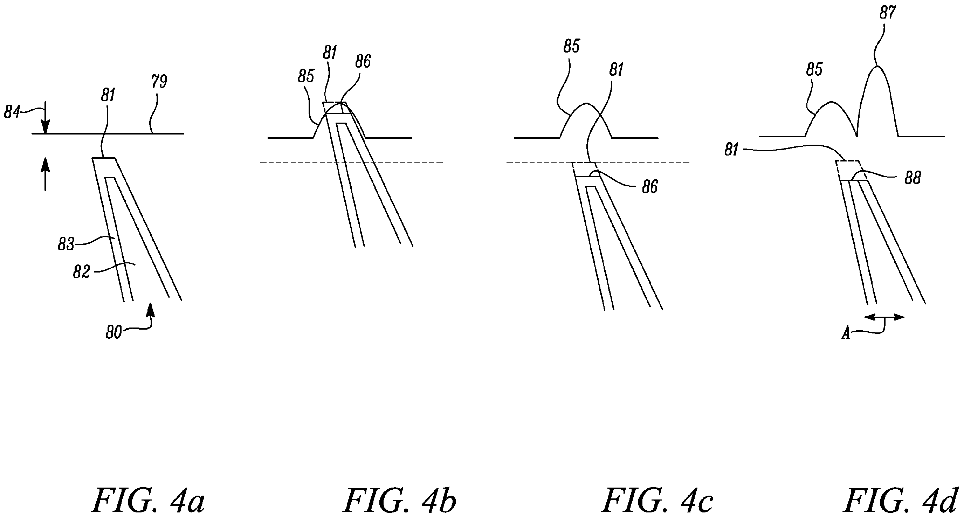

Figures 4a, b, c and d show the process of fin wear during operation.

Figure 4a shows a fin 80 with a fin body 82, a protective coating 83 and a fin tip 81. A sealing gap 84 is defined between the fin tip 81 and the static seal part 79.

Figure 4b shows how during operation, due to mechanical effects, for example due to circumferential forces on the rotating component, or thermal effects, for example due to heating of the rotating component, the fin 80 moves and/or extends towards the static seal part 79. In the figure 4b example the fin 80 has moved towards the static seal part 79 such that it overlaps and/or cuts into the static seal part 79. When the fin 80 is cutting into the static seal part 79 this may be regarded as having a negative sealing gap. During this wear the static seal part wears, as shown by the first seal wear 85, and the fin 80 wears, as shown by the worn fin tip 86.

Figure 4c shows the arrangement of Figure 4b after the period of operation. With the removal of the mechanical and thermal effects the fin 80 returns to its original position. The resulting wear on the static seal part 79, as shown by the first seal wear 85, and the fin 80 wear, as shown by the worn fin tip 86, can be seen.

Figure 4d shows how during a second period of operation, due to axial fin movement A, for example caused by mechanical or thermal effects or due to tolerances of design, the fin 80 can wear in a second position on the static seal part 79. Figure 4d shows how after a second period of wear on a second part of the static seal part 79, the tip of the fin 80 is worn to the further worn tip 88 whilst the static seal part 79 is worn in a second position as shown by the second seal wear 87. The static seal part 79 then has two areas of wear, the first seal wear 85 and the second seal wear 87.

Figures 4a to 4d show how, due to fin movement A, wear is increased on the fin. For example if the fin were to wear in the same place on the static seal part it could be expected that less wear would occur on a second period of wear because the static seal has already been worn to profile 85 by the first period of wear. However when the fin wears on a second part of the static seal part due to fin movement, wear on the fin is increased compared to if it were to wear on the same part of the static seal part. This effect may be applied to any described embodiment.

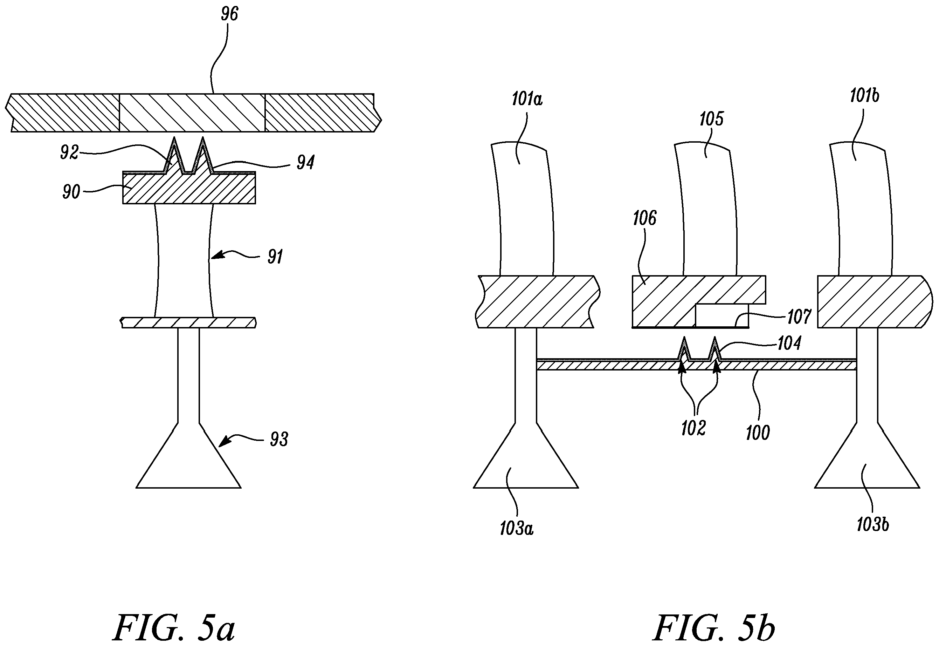

Figures 5a and 5b show possible locations of the fin seal on a gas turbine engine.

Figure 5a shows a sectional side view of a typical rotor stage of a gas turbine engine. For example the stage of a gas turbine engine shown in Figure 5a may be a stage of the intermediate pressure turbine 18 as shown in Figure 1.

Figure 5a shows a rotating seal part 90, a static seal part 96, a fin seal 92, a protective coating 94, a blade 91 and a disc 93. The blade 91 is attached to the disc 93 and extends radially outwardly from the disc 93. A rotating seal part 90 is attached to the radially outer end of the blade 91. The rotating seal part 90 is coupled to the blade 91 and rotates with it. The rotating seal part 90 has a radially inner surface and a radially outer surface. On the radially outer surface is a fin seal 92. The fin seal 92 is coated in a protective coating 94.

The protective coating may extend across the whole of the radially outer surface of the rotating seal part 90, as shown in the figure 5a example. In alternative embodiments the protective coating 94 may only cover the fins of the fin seal 92 or may only cover a portion of (e.g. a fraction of) the fin seal 92 near the tips of the rotor fins.

Whilst two rotor fins are shown in the fin seal 92 of Figure 5a there may be a greater or less number depending on the embodiment. The fins of the fin seal are shown as knife-edge fins in the Figure 5a example. The static seal part 96 radially surrounds the rotating seal part 90. The static seal part 96 and rotating seal part 90 form a circumferential seal. The fin seal 92 create a tortuous path for airflow passing through the seal. The rotating seal part 90 and static seal part 96 may be a labyrinth seal.

Figure 5b shows an alternative embodiment of a circumferential seal in a gas turbine engine. Figure 5b shows a blades 101a and 101b, a stator vane (blade) 105, a static seal part 106, a stator liner 107, discs 103a and 103b and a rotating seal part 100 with a protective coating 104. Whilst Figure 5a shows an arrangement whereby the rotating seal part 90 surrounds a set of blades, Figure 5b shows an arrangement whereby the rotor forms part of the internal structure of the gas turbine engine.

In Figure 5b, a circumferential seal is formed between the rotating seal part 100 and the static seal part 106. The rotating seal part 100 comprises a fin seal 102 that may wear against the static seal part 106. The rotating seal part 100 comprises the protective coating 104 in order to minimise wear of the rotating seal part 100. In the Figure 5b example the static seal part 106 comprises a stator liner 107. The stator liner 107 may be abradable. The stator liner 107 may for example be a honeycomb structure. Any embodiment of a static seal part may comprise a liner.

During the rotating parts of the embodiments shown in Figure 5a or 5b may deform and the gap between the rotating seal part and the static seal part may change. For example, rotational forces, thermal expansion and/or vibration may cause deformation of the rotor and/or rotating seal part 100. The static seal part may also change position during operation. For example in the Figure 5b configuration, a positive sealing gap is shown between the fin seal and the stator liner 107. Deformation of the rotor and/or rotating seal part 100 may decrease the size of the sealing gap. If the sealing gap is reduced to zero then the fin seal is touching the stator, for example the stator liner 107. If the sealing gap is negative then there is an overlap between the rotating seal part 100 and the static seal part 106. For example the fin seal 102 may be cutting into and/or wearing against the static liner 107.

The rotating seal part 100 may cut into the stator liner 107, for example the fin seal 102 may cut into the stator liner 107, in order to provide a better seal between the rotor and stator across a range of operating conditions. This is due to the fact that the sealing gap is zero or negative for a larger part of the operational life, compared to if the rotor fins were designed not to cut into the stator liner 107. The stator liner 107 is optional. For example the stator liner 107 may not be present and a seal is formed between the fin seal and the static seal part. For example the embodiment in Figure 5a (or any other embodiment of the invention) may further comprise a stator liner.

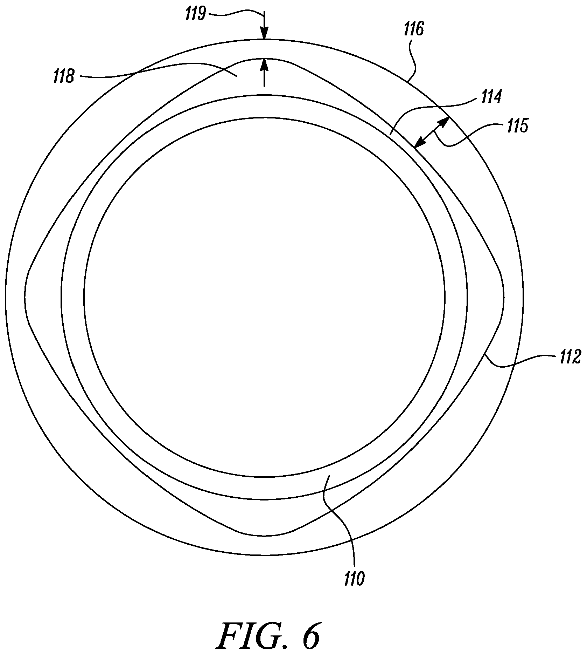

Figure 6 shows an axial view of a circumferential seal. Figure 6 shows a rotating seal part 110, a static seal part 116 and a fin seal 112 comprising a first portion 114 and a second portion 118. The first portion 114 forms a first sealing gap 115 between the first portion 114 and the static seal part 116. The second portion 118 forms a second sealing gap 119 between the second portion 118 and the static seal part 116.

The first portion 114 may correspond to the first fin 65 of Figure 3. The second portion 118 may correspond to the second fin 60 of Figure 3. Whilst in Figure 3 the second fin 60 and first fin 65 are shown in axial series, this may be for diagrammatic convenience, and as in the Figure 6 embodiment the second fin may be at the same axial position as the first fin but at a different circumferential position. The second portion 118 wears first before the first portion 114.

The fin seal 112 comprises a single circumferential fin in the Figure 6 example; however in other embodiments the fin seal 112 may comprise further fins. The further fins may be the same as the single fin of the fin seal 112 or they may be different. The fin seal 112 extends radially outwardly from the rotating seal part 110. The single fin of the fin seal 112 may be a knife-edge fin. The radially outer profile of the fin seal 112 varies around the circumference of the rotating seal part 110. The fin seal 112 is therefore non-axisymmetric.

The shape of the fin seal 112 in the Figure 6 example has an aspect of rotational symmetry of four. In other embodiments the fin seal may have a different number of rotational symmetry. The radially outer profile of the fin seal 112 has four peaks and four troughs. The radially outer profile of the fin seal 112 in the Figure 6 example may be said to vary sinusoidally around the circumference of the rotating seal part 110. The peaks define a circumferential position whereby the gap between the fin seal 112 and the static seal part 116 is at a minimum, for example the second sealing gap 119. The troughs define a circumferential position whereby the gap between the fin seal 112 and the static seal part 116 is at a maximum, for example the second sealing gap 115. The first portion 118 may comprise a peak. The first portion 118 may comprise a circumferential position which includes the first sealing gap 119. The second portion 114 may comprise a trough. The second portion may comprise a circumferential position which includes the second sealing gap 115. As can be seen in the Figure 6 example, there may be three other circumferential portions equivalent to the first portion 118 and/or the second portion 114. In other embodiments there may be a different number of portions equivalent to the first portion 118 and/or the second portion 114. In other embodiments the fin seal 112 may have a different aspect of rotational symmetry.

The second sealing gap 119, defined by the second portion 118 can be seen to have a radially smaller gap compared to the first sealing gap 115, defined by the first portion 114.

The fin seal 112 may have a protective coating. The protective coating may cover the first portion 114 and/or the second portion 118. The static seal part 116 may comprise a stator liner.

During operation the rotating seal part 110 rotates. The rotating seal part 110 may deform during operation, for example due to rotational forces, thermal expansion and/or vibration. The gap between the rotating seal part 110 and the static seal part 116 may decrease, for example according to the steps shown in Figure 4, and the second portion 118 may cut into the static seal part 116.

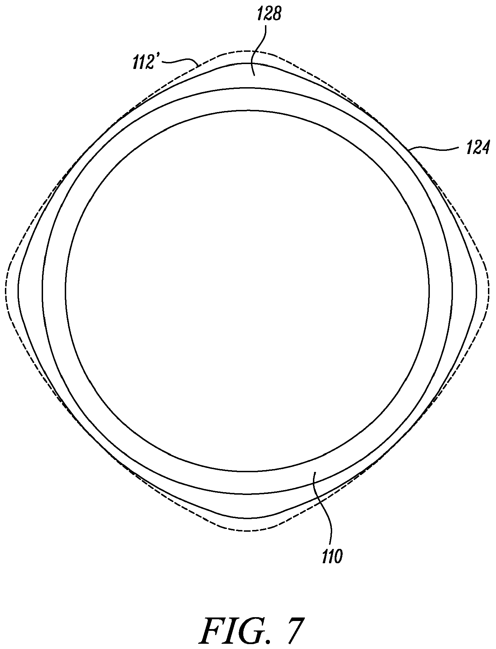

After a period of wear, the Figure 6 embodiment may resemble the Figure 7 embodiment. Figure 7 shows a worn second portion 128 and an unworn first portion 124. The second portion unworn outline 112' (shown as a dotted line) is shown for comparison with the worn second portion 128.

Referring to Figure 6, initially only the second portion 118 (which may be equivalent to the first fin 60 of Figure 3) wears against the static seal part 116. As with the Figure 3 example, once the second portion 118 has worn through its protective coating (for example when it reaches the worn second portion 128) there will still be protective coating on the first portion 114 (which may be equivalent to the first fin 65 of Figure 3).

In a method of sealing a circumferential seal a rotating seal part 110, for example that shown in the Figure 6 example, is rotated. The fin seal 112 forms a seal between the rotating seal part 110 and the static seal part 116. The rotating seal part 110 may deform and the peaks of the rotating seal part 110, for example the second portion 118, may wear against the static seal part 116. This may occur when the second sealing gap 119 is zero or negative (i.e. cutting the stator). Accordingly, material is removed from the second portion 118. The result is the difference between the original fin seal 112' and second portion 118 of the rotating seal part 110 shown in the Figure 7 example.

It will be appreciated that wear will first occur on the peaks of the fin seal 112, for example the second portion 118. In the Figure 6 and Figure 7 examples, there are four peaks equally spaced around the circumference of the rotating seal parts 110 and 60. Therefore as the rotating seal part 110 rotates, and the static seal part 116 remains stationary, during wear a portion of the static seal part 116 will experience intermittent contact with the fin seal 112. For example when the second portion 118 is aligned with the portion of the static seal part 116 it may experience friction and/or wear, whereas when the second portion 114 is aligned with the same portion of the static seal part 116 it may not experience friction and/or wear. As friction and wear generate heat, when the portion of the static seal part 116 is not experiencing wear it will cool down. In this way the stator is being intermittently cut and as a result it will have a lower temperature.

The depth of a protective coating may be limited by manufacturing techniques. For example if the protective coating is sprayed on, it may only be formed to a depth before it may fall off. That is to say, it cannot be sprayed on too deep.

Therefore the example arrangement shown in Figure 7, which may resemble the Figure 6 example after wear, advantageously maintains a thickness of protective coating at the first portion 124 that may be equal (or substantially equal) to the thickness of protective coating at the first portion 114 of the Figure 6 example, because the first portion has not experienced wear. A protective coating on the second portion 118 acts sacrificially during wear in order to maintain the protective coating on the first portion 114, 124. A protective coating at a point of minimum sealing gap may wear preferentially and/or sacrificially before the protective coating distal to the point of minimum sealing gap.

The preferential and/or sacrificial wear of a portion of the protective coating is advantageous in minimising overall wear of a fin seal 112, 62. The preferential and/or sacrificial wear of a portion of the protective coating is advantageous in avoiding wear of unprotected fin seal 112, 62. Unprotected fin seal may be fin seal whereby there is portion of the fin seal that has protective coating at its radially outer profile. The preferential and/or sacrificial wear of a portion of the protective coating is advantageous when further wear occurs. Further wear may occur when a fin seal contacts different parts of a stator in different operating conditions, for example because the same fin portion has to cut a second part of the liner.

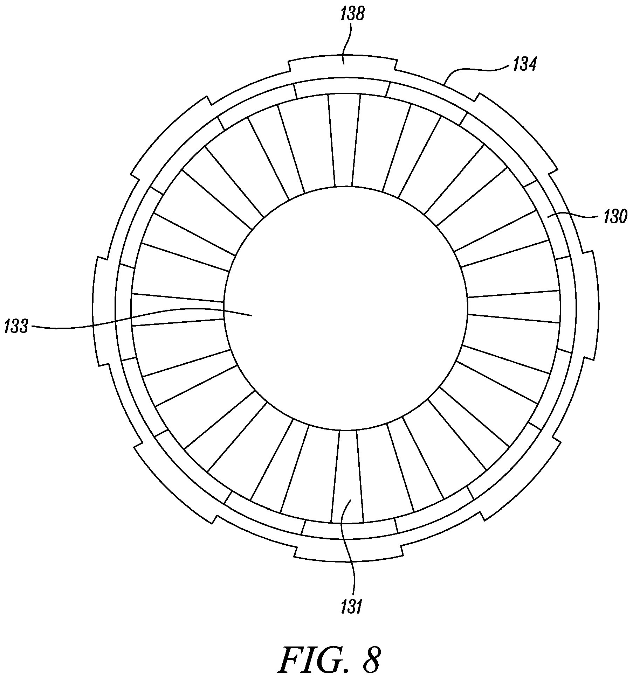

Figure 8 shows an alternative embodiment whereby the height of a rotor fin may vary around the circumference of a rotor. Figure 8 shows a rotor disc 133, rotor blades 131, rotor sealing components 130, first rotor sealing fin 134 and second rotor sealing fin 138.

The first rotor sealing fin 134 and the second rotor sealing fin 138 may form a fin seal. The first rotor sealing fin 134 may be considered a first portion of the fin seal. The first rotor sealing fin 134 may correspond to the second fin 65 of Figure 3. The second rotor sealing fin 138 may be considered a second portion of the fin seal. The second rotor sealing fin 138 may correspond to the first fin 60 of Figure 3.

Each blade has a rotor sealing component 130 on its radially outermost end. The rotor sealing components form a complete sealing component around the circumference of the rotor. For example each rotor sealing component 130 abuts rotor sealing components 130 of adjacent blades. Each rotor sealing component 130 has a rotor fin 134, 138 extending radially outwardly from the radially outer surface of the rotor sealing component 130. A static seal part (not shown) may surround the rotor fins 134, 138 to form a seal. In the Figure 8 example, each rotor sealing component 130 comprises a first sealing fin 134 or second sealing fin 138. In the Figure 8 example a rotor sealing component that comprises a first sealing fin 134 is adjacent two rotor sealing components that comprise a second sealing fin 138. In the Figure 8 example a rotor sealing component that comprises a second sealing fin 138 is adjacent two rotor sealing components that comprise a first sealing fin 134. In the Figure 8 example, rotor sealing components 130 that comprise first sealing fins 134 are circumferentially interspersed between rotor sealing components 130 that comprise second sealing fins 138.

In other embodiments a rotor sealing components 130 may comprise more than one sealing fin, for example two first sealing fins 134 or two sealing fins 138 or a first sealing fin 134 and second sealing 138. In other embodiments a rotor sealing component 130 may comprise more than two sealing fins. In other embodiments a different arrangement of first and second sealing fins may be present around the circumference of the rotor.

The gap between a first sealing fin 134 and a static seal part is smaller than a gap between a second sealing fin 138 and a static seal part. As such the first sealing fin 134 wears before a second sealing fin 138. Therefore after a first period of wear a second sealing fin 138 may still have an unworn protective coating. This reduces the risk of wear occurring on unprotected sealing fins. Advantageously the embodiment shown in Figure 8 shows an example that is easy to manufacture and/or assemble.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A circumferential seal for a rotating component comprising:
a static seal part and a rotating seal part having a common central axis, wherein:
the rotating seal part comprises a fin seal, wherein the fin seal comprises a protective coating, wherein
a first portion of the fin seal has a first sealing gap to the static seal part and a second portion of the fin seal has a second sealing gap to the static seal part, wherein
the first sealing gap has a greater radial dimension than the second sealing gap.

2. The circumferential seal according to claim 1, wherein the protective coating has a thickness greater than or equal to the difference in radial dimension between the first sealing gap and the second sealing gap.

3. The circumferential seal according to claim 1 or claim 2, wherein the static seal part comprises an abradable liner.

4. The circumferential seal according to any one of the previous claims, wherein the rotating seal part is arrangeable such that second portion of the fin seal contacts the static seal part.

5. The circumferential seal according to any one of the previous claims, wherein the rotating seal part is arrangeable such that the second sealing gap has a negative radial dimension.

6. The circumferential seal according to any one of claims 1 to 5, wherein the first portion has a first circumferential position and the second portion has a second circumferential position, and whereby the first circumferential position is different to the second circumferential position.

7. The circumferential seal according to claim 6, wherein the circumferential seal comprises a plurality of first portions and a plurality of second portions, wherein each first portion and each second portion are interspersed around the circumference of the circumferential seal.

8. The circumferential seal according to claim 7, wherein the radial dimension of the first sealing gap varies sinusoidally in the circumferential direction and the radial dimension of the second sealing gap varies sinusoidally in the circumferential direction.

9. The circumferential seal according to any one of claims 1 to 5, wherein
the fin seal comprises a first fin and a second fin, wherein the first fin is axially offset from the second fin with respect to the common rotational axis, and wherein the first fin comprises the first portion and the second fin comprises the second portion.

10. The circumferential seal according to claim 9, wherein the first portion extends around the entire circumference of the circumferential seal and the second portion extends around the entire circumference of the circumferential seal.

11. The circumferential seal according to any one of the previous claims, wherein the fin seal further comprises a third portion with a third sealing gap, and wherein optionally the third sealing gap is of different radial dimension to the first and/or second sealing gaps.

12. The circumferential seal according to claim 11, wherein the fin seal further comprises a fourth portion with a fourth sealing gap, and wherein optionally the fourth sealing gap is of different radial dimension to the first and/or second and/or third sealing gaps.

13. A stage of a gas turbine engine comprising the circumferential seal according to any one of claims 1 to 5, the stage further comprising a set of blades, wherein
the rotating seal part comprises a plurality of blade sealing parts, wherein each blade sealing part corresponds to, and is attached to, a blade of the set of blades, and wherein each blade sealing part comprises a first portion or a second portion, and wherein optionally blades that comprise a first portion and blades that comprise a second portion are interspersed.

14. A gas turbine engine comprising the stage according to claim 13.

15. A method of sealing a circumferential seal according to claims 3 and 4, the method comprising the step of rotating the rotating seal part such that second portion wears against the abradable liner for providing a tight seal, whilst the rotating seal part is arranged such that a positive first sealing gap is maintained.
